# EUROPEAN PATENT SPECIFICATION

(11) **EP 1 914 148 B1**
(45) Date of publication and mention of the grant of the patent: **15.12.2010**
(21) Application number: 07118652.2
(22) Date of filing: 17.10.2007
(51) Int. Cl.: B62D 1/06

(54) **Heating element for vehicle steering wheels**
Heizelement für Fahrzeuglenkräder
Élément de chauffage pour volants de direction de véhicules

(30) Priority: 19.10.2006 IT VE20060063
(43) Date of publication of application: 23.04.2008
(73) Proprietor: I.R.C.A. S.p.a. Industria Resistenze Corazzate e Affini, 31020 San Vendemiano (IT)
(72) Inventor: Marcer, Sandro, 31020, San Vendemiano (IT)
(74) Representative: Piovesana, Paolo

(56) References cited:
- WO-A-2004/067355
- US-A1- 2002 033 389

## Description

The present invention relates to a heating element for vehicle steering wheels.

Heating elements for vehicle steering wheels are known. One of these known heating elements consists of a resistive wire applied to a sponge band applied to the steering wheel and covered by a leather band.

However, this known heating element presents certain drawbacks, and in particular:
- laboriousness in applying the resistive wire to the steering wheel,
- a considerable time for the steering wheel temperature to reach a suitable level because of the small surface contact between the wire and the leather.

Moreover, as the power (about 80 watt) to be obtained with the available voltage requires the use of a resistance of low ohmic value, i.e. a thick but short wire, this element presents the drawback of a substantial increase in the thickness of the steering wheel cross-section.

WO 2004/067355 forms the preamble of claim 1 and describes a heating element for steering wheels of the resistive-wire type.

Since the thickness of the wire is of about 0,6 mm, in order to avoid this wire forming folds on the leather covering, which are unaesthetic, it is necessary to resort two ways of application. The first requires to apply a thick sponge which therefore renders the wheel spongy and so not pleasant to the touch.

The second one foresees to make the wheel out of two moulds and placing the heater inside the two.

This last solution involves a high cost of the steering wheel and a long time for its warming up.

US 2003/0111 453 A1 described a heating element on a steering wheel with an electrically conductive layer comprising metal and formed from a curred conductive ink.

On the contrary, the invention foresees to utilize an extensible band as the supporting element of a resistive track obtained by means of the etched foil technique, typical of the printed circuits, known as "etching".

This solution brings the following advantages:
- no folds thanks to the presence of the extensible support,
- a reduced thickness thanks to the reduced thickness of the resistive track,
- applicable to an ordinary steering wheel (it can be decided at the end of the manufacturing whether to make it heated or not, not having to use a thinner one or to give enough space for the sponge or to make the second mould)
- a much more rapid heating as the heating element is placed immediately underneath the leather.
- no need of any sponge.

The rectangular band has a length which corresponds to the inner diameter of the steering wheel and, in the application phase to the steering wheel, it is pulled along its central axis to adapt over the steering wheel to its shape without any folds thank to the extensibility of the material.

An object of the invention is therefore to eliminate these drawbacks by providing a steering wheel heating element which is of very small thickness while at the same time allowing rapid uniform heating of the steering wheel to be achieved.

Another object of the invention is to provide a device which does not give rise to an unpleasant outer appearance of the covering material, due for example to wrinkles.

These and other objects which will be apparent from the ensuing description are attained according to the invention by a heating element for vehicle steering wheels as claimed in claim 1.

A preferred embodiment of the present invention is further clarified hereinafter by way of non-limiting example with reference to the accompanying drawings, in which:

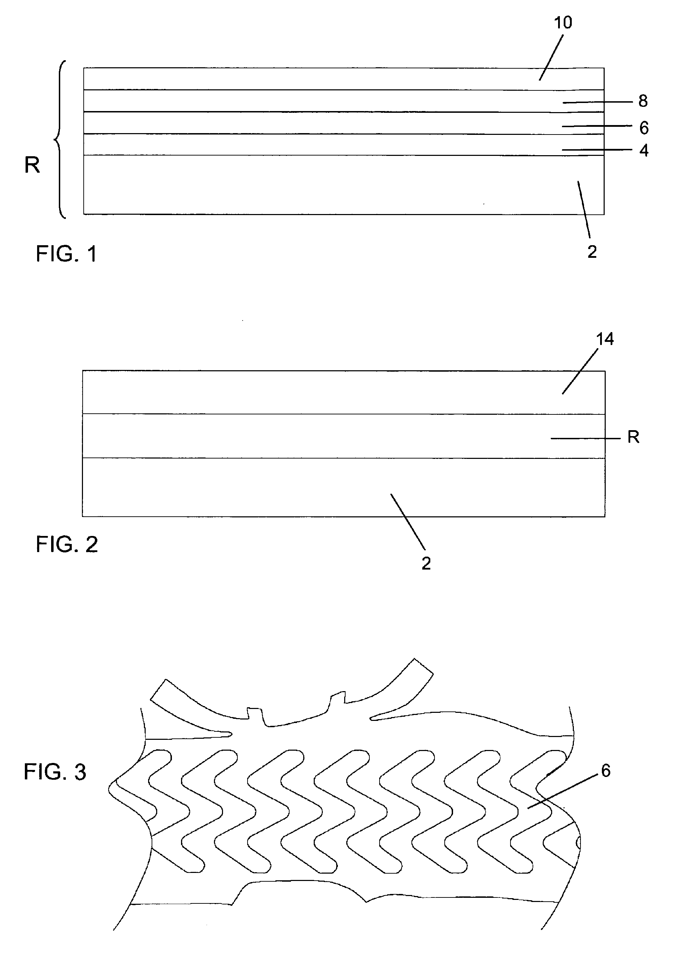

Figure 1 shows in partial longitudinal section a heating element according to the invention,
Figure 2 shows it in partial longitudinal section applied to a steering wheel, and
Figure 3 shows in plan view.

As can be seen from the figures, the heating element R of the invention comprises substantially a rectangular sponge band 2 of about 2 mm thickness, a surface of which is covered by a double-sided adhesive layer 4 to which an aluminium resistive track 6 is applied extending along the entire length of the band.

The resistive track is covered by a second double-sided adhesive 8 which is protected by a removable liner 10.

The heating element of the invention is produced in the following manner.

An aluminium sheet is glued onto a sponge layer 2 and is then subjected to silk screen treatment.

The metal not protected by the ink is then removed to obtain a continuous conductive track 6 of sinusoidal pattern on which a further double-sided adhesive layer 8 is applied and is then covered by the liner 10.

The resistive element is then secured in the following manner. An annular leather band is wrapped about a cylindrical roller the diameter of which corresponds substantially to the diameter of the steering wheel 12, with that side which is to form the outer surface of the steering wheel being in contact with the roller.

The resistive element R is applied to said band 14 along the double-sided adhesive layer 8 after removing the liner 10, so that the sponge band 2 assumes the most outer configuration.

The structure obtained in this manner is withdrawn from the roller in such a manner that during its disengagement it rotates along the annular axis through 180° so that the sponge becomes positioned on the inside of the annular structure.

This is then applied to the lateral surface of the steering wheel 12 where it is then secured by sewing together the edges of the leather.

From the aforegoing it is apparent that the heating element for steering wheels according to the invention presents numerous advantages, and in particular:
- it ensures effective steering wheel heating by providing about 30% covering of the surface to be heated, with optimum thermal exposure and a good heating rate (the wire covering 5% of the total surface),
- it can be easily and comfortably mounted on the steering wheel,
- it provides automatic adjustment of the absorbed power, with a maximum on starting (with heating at ambient temperature), to achieve optimum temperature as quickly as possible, and a minimum (with about 20% reduction in absorbed power) with the transient stage completed, so reducing the current absorption of the heating element when at working temperature,
- the cost of the aluminium heating element is a quarter of the cost of a wire heating element.

## Claims

1. A heating element for steering wheels, comprising:
- an extendable band (2), the length of which corresponds substantially to the steering wheel perimeter,
- a resistive track (6) fixed to a surface of said band (2),
- a double-sided adhesive covering (8) for said track,
- a removable liner (10) to cover said double-sided adhesive covering (8),
**characterised in that** the resistive track (6) consists of an aluminium sinusoidal pattern obtained through an ink silk screen treatment of an aluminium sheet applied to said extendable band (2).

2. An element as claimed in claim 1, **characterised in that** the track (6) is fixed to the extendable band (2) by a double-sided adhesive layer.

3. An element as claimed in claim 1, **characterised in that** the band (2) is a sponge band.

4. An element as claimed in claim 1, **characterised in that** the band (2) is substantially rectangular.

5. An element as claimed in claim 1, **characterised in that** the band (2) has a thickness between 1 and 3 mm.

## Patentansprüche

1. Heizelement für Lenkräder, umfassend:
- ein dehnbares Band (2), dessen Länge im Wesentlichen dem Lenkradumfang entspricht,
- eine Widerstandsbahn (6), die an einer Oberfläche des Bandes (2) befestigt ist,
- eine doppelseitig klebende Abdeckung (8) für die Bahn,
- eine abnehmbare Deckschicht (10), um die doppelseitig klebende Abdeckung (8) zu bedecken,
**dadurch gekennzeichnet, dass** die Widerstandsbahn (6) aus einem sinusförmigen Muster aus Aluminium besteht, das durch eine Tintensiebdruckbehandlung eines Aluminiumbogens erzielt wird, der auf das dehnbare Band (2) aufgetragen wird.

2. Element nach Anspruch 1, **dadurch gekennzeichnet, dass** die Bahn (6) an dem dehnbaren Band (2) durch eine doppelseitige Klebeschicht befestigt ist.

3. Element nach Anspruch 1, **dadurch gekennzeichnet, dass** das Band (2) ein Schaumstoffband ist.

4. Element nach Anspruch 1, **dadurch gekennzeichnet, dass** das Band (2) im Wesentlichen rechteckig ist.

5. Element nach Anspruch 1, **dadurch gekennzeichnet, dass** das Band (2) eine Dicke zwischen 1 und 3 mm aufweist.

## Revendications

1. Elément de chauffage pour volants de direction, comprenant :
- une bande extensible (2) dont la longueur correspond essentiellement au périmètre du volant de direction,
- une piste résistive (6) fixée à une surface de ladite bande (2),
- un revêtement adhésif à double face (8) pour ladite piste,
- une doublure amovible (10) pour couvrir ledit revêtement adhésif à double face (8),
**caractérisé en ce que** la piste résistive (6) se compose d'un motif sinusoïdal en aluminium obtenu par un traitement sérigraphique d'une feuille d'aluminium appliquée sur ladite bande extensible (2).

2. Elément selon la revendication 1, **caractérisé en ce que** la piste (6) est fixée à la bande extensible (2) par une couche adhésive à double face.

3. Elément selon la revendication 1, **caractérisé en ce que** la bande (2) est une bande éponge.

4. Elément selon la revendication 1, **caractérisé en ce que** la bande (2) est essentiellement rectangulaire.

5. Elément selon la revendication 1, **caractérisé en ce que** la bande (2) a une épaisseur comprise entre 1 et 3 mm.
